# EUROPÄISCHE PATENTANMELDUNG

(11) **EP 2 787 282 A1**
(43) Veröffentlichungstag der Anmeldung: **08.10.2014**
(21) Anmeldenummer: 14161470.1
(22) Anmeldetag: 25.03.2014
(51) Int. Cl.: F24C 15/00, F24C 15/04, F25D 27/00, G02B 6/00

(54) **Beleuchtungsvorrichtung für einen Innenraum eines Haushaltsgeräts sowie Haushaltsgerät mit einer derartigen Beleuchtungsvorrichtung**

(30) Priorität: 03.04.2013 DE 102013205824
(71) Anmelder: BSH Bosch und Siemens Hausgeräte GmbH, 81739 München (DE)
(72) Erfinder: Brunner, Martin, 75177 Pforzheim (DE); Frey, Sebastian, 75203 Königsbach-Stein (DE); Hintermayer, Manfred, 76185 Karlsruhe (DE)

(57) **Zusammenfassung**

Die Erfindung betrifft eine Beleuchtungsvorrichtung (13) zum Beleuchten eines Innenraums (2) eines Haushaltsgeräts (1), mit zumindest einer Lichtquelle (19), wobei die Beleuchtungsvorrichtung (13) eine Scheibe (15 bis 18) einer Tür (4) zum Verschließen des Innenraums (2) als Lichtleiter aufweist, in welche das Licht der Lichtquelle (19) über zumindest eine Einkoppelseite (16a bis 16d) der Scheibe (15 bis 18) in diese Scheibe (15 bis 18) einkoppelbar ist, und an einer dem Innenraum (2) abgewandten Oberfläche (16f) der Scheibe (15 bis 18) zumindest ein Lichtumlenkelement (20, 21) angeordnet ist, mit welchem das in die Scheibe (15 bis 18) eingekoppelte Licht (22) auf die dem Innenraum (2) zugewandte Oberfläche (16e) der Schiebe (15 bis 18) umlenkbar und aus dieser zugewandten Oberfläche (16e) aus der Scheibe (15 bis 18) in den Innenraum (2) auskoppelbar ist. Die Erfindung betrifft auch ein Haushaltsgerät (1) mit einer Beleuchtungsvorrichtung (13).

## Beschreibung

Die Erfindung betrifft eine Beleuchtungsvorrichtung zum Beleuchten eines Innenraums eines Haushaltsgeräts, mit zumindest einer Lichtquelle. Des Weiteren betrifft die Erfindung ein Haushaltsgerät mit einer derartigen Beleuchtungsvorrichtung.

Ein Haushaltsgerät, wie beispielsweise ein Gargerät, umfasst einen Garraum, der frontseitig durch eine Tür verschließbar ist. Zur Ausleuchtung dieses Garraums ist es bekannt, dass zumindest eine Lichtquelle an einer den Garraum begrenzenden Wand einer Muffel angeordnet ist, oder durch diese hindurchstrahlt. Darüber hinaus ist es bekannt, dass Lichtquellen extern zum Garraum positioniert sind und das von den Lichtquellen emittierte Licht zunächst in die Tür eingeleitet wird und durch separate Bauteile ausgebildete Reflektoren, die in der Tür angeordnet sind, das Licht in den Garraum umgelenkt wird. Entsprechende Ausgestaltungen sind beispielsweise aus der WO 03/036176 A1 und der WO 2004/097304 A1 bekannt.

Derartige Reflektoren sind als gegenständliche Komponenten relativ bauraumintensiv und können daher nur an spezifischen Stellen eingebaut werden. Gegebenenfalls ist auch die Lichtreflexion eingeschränkt und somit die vollständige Garraumausleuchtung sowie die Ausleuchtung an ganz spezifisch gewünschten Stellen im Garraum eingeschränkt.

Es ist Aufgabe der vorliegenden Erfindung, eine Beleuchtungsvorrichtung zum Beleuchten eines Innenraums eines Haushaltsgeräts wie auch ein derartiges Haushaltsgerät zu schaffen, durch welche bzw. bei welchem das Ausleuchten des Innenraums sehr platzsparend und bedarfsgerecht erfolgen kann.

Diese Aufgabe wird durch eine Beleuchtungsvorrichtung und ein Haushaltsgerät gemäß den unabhängigen Ansprüchen gelöst.

Eine erfindungsgemäße Beleuchtungsvorrichtung zum Beleuchten eines Innenraums eines Haushaltsgeräts umfasst zumindest eine Lichtquelle. Die Beleuchtungsvorrichtung umfasst darüber hinaus eine Scheibe einer Tür zum Verschließen des Innenraums. Diese Scheibe bildet einen Lichtleiter der Beleuchtungsvorrichtung, in welche das Licht der Lichtquelle über zumindest eine Einkoppelseite der Scheibe in diese Scheibe einkoppelbar ist. An einer dem Innenraum abgewandten Oberfläche der Scheibe ist zumindest ein Lichtumlenkelement angeordnet, mit welchem das in die Scheibe eingekoppelte Licht auf die dem Innenraum zugewandte Oberfläche umlenkbar und aus dieser zugewandten Oberfläche aus der Scheibe in den Innenraum auskoppelbar ist. Durch eine derartige Ausgestaltung wird ein hochfunktionelles, kompaktes System geschaffen. Eine ohnehin bei der Tür vorhandene Türscheibe wird nicht nur zum Abdecken des Garraums verwendet, sondern funktioniert darüber hinaus auch als Lichtleiter.

Vorzugsweise ist das Lichtumlenkelement zerstörungsfrei unlösbar an der Türscheibe befestigt.

Vorzugsweise ist vorgesehen, dass das Lichtumlenkelement eine Bedruckung ist. Durch diese Ausgestaltung wird somit quasi eine Einheit zwischen der Scheibe und dem Lichtumlenkelement geschaffen, so dass diese dauerhaft positionsgenau zueinander angeordnet sind. Darüber hinaus ist gerade durch diese Ausgestaltung das Wechselspiel zwischen der Lichtleiterfunktion der Scheibe und dem ortsgenauen und gezielten Umlenken des Lichts und dem Auskoppeln des Lichts aus der Scheibe erreicht und im Hinblick auf die Ausleuchtung des Innenraums mit sehr hohem Lichtanteil möglich.

Vorzugsweise ist vorgesehen, dass die Bedruckung aus einem zumindest auf der der Scheibe zugewandten Seite weißen Material ausgebildet ist. Durch diese Ausgestaltung wird ein sehr hoher Reflexionsgrad des eingekoppelten Lichts erreicht, so dass ein sehr hoher Anteil des eingekoppelten Lichts dann auch in den Innenraum geleitet werden kann.

Vorzugsweise ist vorgesehen, dass das Lichtumlenkelement als zumindest ein Streifen, insbesondere als rechteckiger Streifen, ausgebildet ist. Vorzugsweise erstreckt sich dieser Streifen parallel zu einem Seitenrand der Scheibe. Vorzugweise ist der Streifen über zumindest die Hälfte, vorzugsweise zumindest ¾ der Länge dieses Seitenrands in Längserstreckung des Streifens betrachtet, ausgebildet.

Bevorzugt ist vorgesehen, dass zumindest zwei parallel zueinander angeordnete und beabstandet zueinander ausgebildete Streifen auf der Scheibe ausgebildet sind. Dadurch wird eine sehr symmetrische Lichteinstrahlung in den Innenraum ermöglicht, ohne dass das Sichtfeld zum Durchsehen durch die Scheibe von außen in den Innenraum behindert wäre.

Vorzugsweise ist vorgesehen, dass der Streifen vertikal mit seiner Längsrichtung angeordnet ist. Es kann auch zusätzlich oder anstatt dazu vorgesehen sein, dass der Streifen horizontal orientiert ist. Es können auch mehrere separate Streifen ausgebildet sein, die alle gleich orientiert sind. Es können auch unterschiedliche Orientierungen der Streifen vorgesehen sein. Zumindest ein Streifen kann auch zumindest einmal geschwungen oder zumindest einmal gekrümmt ausgebildet sein. Bei mehrer Streifen können diese gleich in den Ausmaßen und der Form ausgebildet sein. Sie können auch unterschiedlich diesbezüglich gestaltet sein.

Vorzugsweise ist vorgesehen, dass die Einkoppelseite eine Randseite der Scheibe ist und somit eine im Hinblick auf die plattenartige Ausgestaltung der Scheibe eine Schmalseite darstellt. Die Positionierung der Lichtquellen einerseits und die gezielte präzise und somit umfängliche Lichteinkopplung andererseits ist dadurch ermöglicht.

Vorzugsweise ist vorgesehen, dass über zumindest zwei, insbesondere alle vier, Randseiten der Scheibe Licht in die Scheibe eingekoppelt ist bzw. einkoppelbar ist. Die oben genannten Vorteile im Hinblick der symmetrischen maximalen Lichteinstrahlung in den Innenraum ist dadurch nochmals verbessert.

Vorzugsweise ist vorgesehen, dass die Lichtquelle eine Leuchtdiode ist. Diese ist sehr energieeffizient betreibbar, platzsparend ausgestaltet und für die Lichteinkopplung an dieser schmalen Randseite der Scheibe besonders geeignet. Darüber hinaus lässt sich durch diese Ausgestaltung eine hohe Anzahl von Lichtquellen positionieren, wodurch die Ausleuchtung nochmals verbessert ist.

Vorzugsweise ist vorgesehen, dass die Scheibe die dem Innenraum nächstgelegene Scheibe eines Scheibenpakets der Tür ist. Die oben genannten Vorteile werden dadurch nochmals begünstigt. In dem Zusammenhang ist es bekannt, dass Türen für beispielsweise einen Backofen zwei oder mehrere derartige Scheiben aufweisen, die parallel und beabstandet zueinander angeordnet sind.

Vorzugsweise ist vorgesehen, dass die Beleuchtungsvorrichtung zumindest zwei Scheiben einer Tür zum Verschließen des Innenraums als Lichtleiter aufweist, wobei in beide Scheiben das Licht zumindest einer Lichtquelle über zumindest jeweils eine Einkoppelseite der Scheibe in diese Scheiben einkoppelbar ist, und an jeweils einer dem Innenraum abgewandten Oberfläche der Scheiben jeweils zumindest ein Lichtumlenkelement ausgebildet ist. Mit diesem jeweiligen Lichtumlenkelement ist das in die jeweilige Scheibe eingekoppelte Licht auf die dem Innenraum zugewandte Oberfläche der jeweiligen Scheibe umlenkbar und aus dieser zugewandten Oberfläche aus der jeweiligen Scheibe in den Innenraum auskoppelbar. Einerseits lässt sich dadurch die Ausleuchtung verbessern, andererseits können auch noch individuellere und variablere Ausleuchtungsszenarien im Hinblick auf unterschiedliche Farben und/oder unterschiedliche örtliche Beleuchtungen im Innenraum Rechnung tragen.

Des Weiteren betrifft die Erfindung ein Haushaltsgerät mit einem Innenraum und einer Tür zum Verschließen des Innenraums sowie einer erfindungsgemäßen Beleuchtungsvorrichtung oder einer vorteilhaften Ausgestaltung davon. Insbesondere ist dieses Haushaltsgerät ein Gargerät, vorzugsweise ein Backofen, wobei der Innenraum ein Garraum ist.

Ein Ausführungsbeispiel der Erfindung wird nachfolgend anhand schematischer Zeichnungen näher erläutert. Es zeigen:
- Fig. 1: eine schematische perspektivische Darstellung eines Ausführungsbeispiels eines erfindungsgemäßen Haushaltsgeräts;
- Fig. 2: eine perspektivische Darstellung eines Ausführungsbeispiels einer erfindungsgemäßen Beleuchtungsvorrichtung an einer Tür des Gargeräts gemäß Fig. 1; und
- Fig. 3: eine Schnittdarstellung durch einen Teilbereich der Darstellung in Fig. 2.

In den Figuren werden gleiche oder funktionsgleiche Elemente mit den gleichen Bezugszeichen versehen.

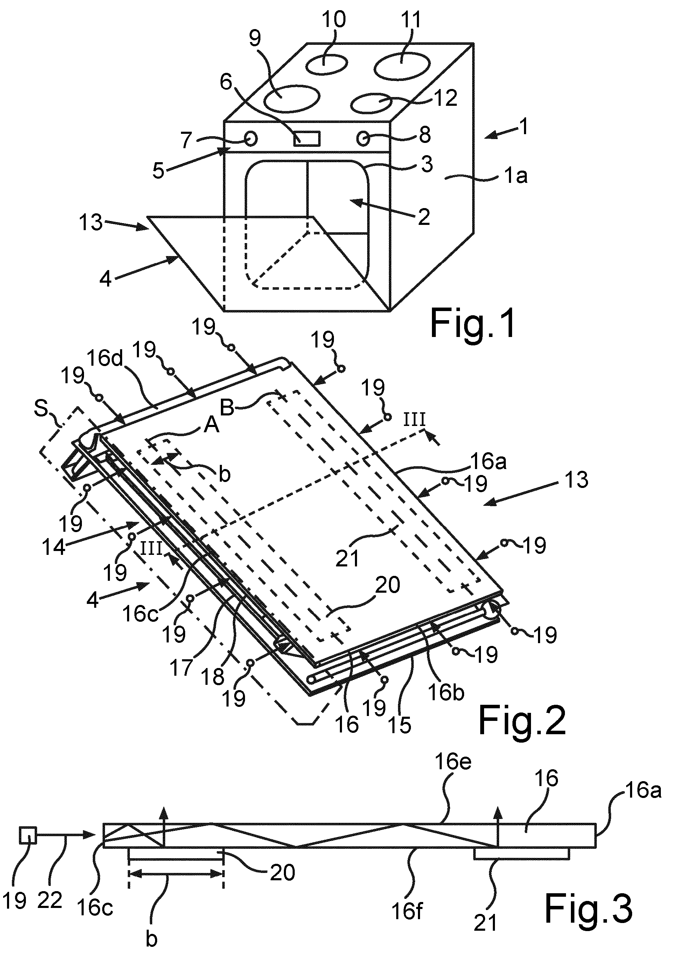

In Fig. 1 ist in einer perspektivischen Darstellung ein als Gargerät 1, insbesondere als Backofen, ausgebildetes Haushaltsgerät gezeigt. Das Gargerät 1 umfasst ein Gehäuse 2, in welchem eine Muffel 3 angeordnet ist. Die Muffel 3 begrenzt mit ihren Wänden einen Garraum 2, in welchen Lebensmittel zum Zubereiten eingebracht werden können. Eine frontseitige Beschickungsöffnung der Muffel 3 ist durch eine Tür 4 verschließbar. Das Gargerät 1 umfasst im Ausführungsbeispiel beispielhaft eine Bedienvorrichtung 5 mit in Position und Anzahl lediglich beispielhaft gezeigt einer Anzeigevorrichtung 6 und Bedienelementen 7 und 8. Ebenso umfasst das Gargerät 1 beispielhaft in Position und Anzahl Kochzonen 9, 10, 11 und 12.

Das Gargerät 1 umfasst darüber hinaus eine Beleuchtungsvorrichtung 13, die zum Beleuchten des als Garraum 2 ausgebildeten Innenraums gestaltet ist.

In Fig. 2 ist zur näheren Erläuterung der Beleuchtungsvorrichtung 13 die Tür 4 perspektivisch und teilweise transparent sowie gebrochen gezeigt. S bezeichnet dabei eine Schnittebene, die senkrecht zu den Türscheiben liegt.

Im Ausführungsbeispiel umfasst die Tür 4 ein Scheibenpaket 14, welches eine äußere Frontscheibe 15, eine dazu beabstandet und parallel angeordnete Innenscheibe 16 und zwischen der Außenscheibe 15 und der Innenscheibe 16 zwei Zwischenscheiben 17 und 18 aufweist.

Die Beleuchtungsvorrichtung 13 umfasst zumindest eine, vorzugsweise eine Mehrzahl von Lichtquellen 19, die im Ausführungsbeispiel als Leuchtdioden ausgebildet sind. Die Lichtquellen 19 sind im Ausführungsbeispiel in der Tür 4 angeordnet, sie können jedoch auch türextern angeordnet sein.

Die Beleuchtungsvorrichtung 13 umfasst darüber hinaus zumindest eine der Scheiben 15 bis 17, vorzugsweise zumindest die Innenscheibe 16. Diese Innenscheibe 16 ist die dem Garraum 2 nächstgelegene Scheibe, wenn die Tür 4 geschlossen ist.

Diese Innenscheibe 16 weist schmale Randseiten 16a, 16b, 16c und 16d auf. Über diese schmalen Randseiten 16a bis 16d sind Einkoppelstellen gebildet, über welche das Licht der Lichtquellen 19 in die Innenscheibe 16 eingekoppelt wird.

In Fig. 3 ist zur weiteren Erläuterung eine Schnittdarstellung entlang der Schnittlinie III-III in Fig. 2 gezeigt, wobei hier in der Schnittdarstellung nur die Innenscheibe 16 gezeigt ist.

Diese Innenscheibe 16 umfasst eine dem Garraum 2 zugewandte Oberfläche 16e und eine dem Garraum 2 abgewandte und den weiteren Scheiben 15, 17, 18 zugewandte Oberfläche 16f.

Auf der Oberfläche 16f sind Lichtumlenkelemente 20 und 21 in Form von Bedruckungen und somit zerstörungsfrei unlösbar auf der Innenscheibe 16 aufgebracht. Vorzugsweise sind die Bedruckungen 20 und 21 zumindest auf der an der Oberfläche 16f anliegenden Seite aus einem weißen Material. Dadurch wird der Reflexionsgrad der auftretenden Lichtstrahlen erhöht.

Das über die Lichtquellen 19 in die Scheibe 16 über die Randseiten 16a bis 16d eingekoppelte Licht 22 wird durch die Lichtumlenkelemente 20 und 21 von der dem Garraum 2 abgewandten Oberfläche 16f zur dem Garraum 2 zugewandten Oberfläche 16e der Innenscheibe 16 umgelenkt und über diese Oberfläche 16e aus der Scheibe 16 ausgekoppelt und in den Garraum 2 eingestrahlt. Zumindest die Innenscheibe 16 ist somit als Lichtleiter der Beleuchtungsvorrichtung 13 ausgebildet.

Abhängig vom Muster und/oder der Dichte und/oder der Farbe der Bedruckung kann das eingekoppelte Licht 22 an jeder Stelle der Scheibe 16 in den Garraum 2 geleitet werden. Die Farbe der Bedruckung ist vorzugsweise weiß, da weiß den höchsten Reflexionsgrad aufweist. Über das Muster und/oder die Dichte der Bedruckung kann der Anteil des Lichts, welches an dieser Stelle aus der Scheibe 16 ausgeleitet wird, eingestellt werden. Über die Gestaltung der Bedruckung kann so die Aufteilung des Lichtanteils über die quasi als Auskopplungsfläche dienende Oberfläche 16e eingestellt werden.

Es kann auch vorgesehen sein, dass zumindest eine weitere Scheibe 15, 17, 18 als weiterer Lichtleiter fungiert und entsprechend Licht über Lichtquellen in diese weitere Scheibe eingestrahlt wird.

Wie noch aus den Darstellungen in Fig. 2 und Fig. 3 zu erkennen ist, sind die Lichtumlenkelemente 20 und 21 in Form der Bedruckungen als längliche Streifen gestaltet, die mit ihren Längsachsen A und B parallel zueinander orientiert sind und beabstandet zueinander angeordnet sind. Sie erstrecken sich in Richtung der Längsachsen A und B betrachtet zumindest über ¾ der gesamten Höhe der Innenscheibe 16. Sie sind darüber hinaus benachbart zu diesen Randseiten 16a und 16c, davon jedoch um maximal die Breite b der Lichtumlenkelemente 20 und 21 beabstandet ausgebildet.

Durch eine derartige Ausgestaltung einer Beleuchtungsvorrichtung 13 kann eine sehr groß bzw. vollflächige Lichteinbringung in den Garraum 2 erreicht werden und damit eine bessere und gleichmäßigere Ausleuchtung bzw. Lichtverteilung im Garraum erzielt werden. Durch quasi eine multifunktionelle Nutzung zumindest einer Scheibe 15 bis 18 der Tür 4 auch als Lichtleiter, können auch Bauteile gegenüber herkömmlichen Ausgestaltungen eingespart werden. Zu erwähnen ist auch, dass auch das eingekoppelte Licht an anderen Stellen in der Innenscheibe 16 so umgelenkt wird, dass es dann über die Oberfläche 16e in den Garraum 2 gelangt. Durch die Lichtumlenkelemente 20, 21 wird dies jedoch verstärkt und es kann sehr gezielt und örtlich spezifiziert eine Lichteinstrahlung erfolgen.

### Bezugszeichenliste

- 1: Haushaltsgerät
- 2: Innenraum
- 3: Muffel
- 4: Tür
- 5: Bedienvorrichtung
- 6: Anzeigevorrichtung
- 7: Bedienelement
- 8: Bedienelement
- 9, 10, 11, 12: Kochzonen
- 13: Beleuchtungsvorrichtung
- 14: Scheibenpaket
- 15: äußere Frontscheibe
- 16: Innenscheibe
- 16a, 16b, 16c, 16d: schmale Randseiten
- 16e: Oberfläche
- 16f: Oberfläche
- 17: Zwischenscheibe
- 18: Zwischenscheibe
- 19: Lichtquelle
- 20: Lichtumlenkelement
- 21: Lichtumlenkelement
- 22: eingekoppeltes Licht

## Patentansprüche

1. Beleuchtungsvorrichtung (13) zum Beleuchten eines Innenraums (2) eines Haushaltsgeräts (1), mit zumindest einer Lichtquelle (19), **dadurch gekennzeichnet, dass** die Beleuchtungsvorrichtung (13) eine Scheibe (15 bis 18) einer Tür (4) zum Verschließen des Innenraums (2) als Lichtleiter aufweist, in welche das Licht der Lichtquelle (19) über zumindest eine Einkoppelseite (16a bis 16d) der Scheibe (15 bis 18) in diese Scheibe (15 bis 18) einkoppelbar ist, und an einer dem Innenraum (2) abgewandten Oberfläche (16f) der Scheibe (15 bis 18) zumindest ein Lichtumlenkelement (20, 21) angeordnet ist, mit welchem das in die Scheibe (15 bis 18) eingekoppelte Licht (22) auf die dem Innenraum (2) zugewandte Oberfläche (16e) der Schiebe (15 bis 18) umlenkbar und aus dieser zugewandten Oberfläche (16e) aus der Scheibe (15 bis 18) in den Innenraum (2) auskoppelbar ist.

2. Beleuchtungsvorrichtung (13) nach Anspruch 1, **dadurch gekennzeichnet, dass** das Lichtumlenkelement (20, 21) zerstörungsfrei unlösbar an der Scheibe (15 bis 18) angebracht ist, insbesondere eine Bedruckung ist.

3. Beleuchtungsvorrichtung (13) nach Anspruch 2, **dadurch gekennzeichnet, dass** die Bedruckung aus einem zumindest auf der der Scheibe (15 bis 18) zugewandten Seite weißen Material ist.

4. Beleuchtungsvorrichtung (13) nach einem der vorhergehenden Ansprüche, **dadurch gekennzeichnet, dass** das Lichtumlenkelement (20, 21) als zumindest ein Streifen, insbesondere als rechteckiger Streifen, ausgebildet ist.

5. Beleuchtungsvorrichtung (13) nach Anspruch 4, **dadurch gekennzeichnet, dass** der Streifen vertikal und/oder oder horizontal angeordnet ist.

6. Beleuchtungsvorrichtung (13) nach einem der vorhergehenden Ansprüche, **dadurch gekennzeichnet, dass** die Einkoppelseite eine Randseite (16a bis 16d) der Scheibe (15 bis 18) ist.

7. Beleuchtungsvorrichtung (13) nach Anspruch 6, **dadurch gekennzeichnet, dass** über zumindest zwei, insbesondere alle vier, Randseiten (16a bis 16d) der eckigen Scheibe (15 bis 18) Licht (22) in die Scheibe (15 bis 18) einkoppelbar ist.

8. Beleuchtungsvorrichtung (13) nach einem der vorhergehenden Ansprüche, **dadurch gekennzeichnet, dass** die Lichtquelle (19) eine Leuchtdiode ist.

9. Beleuchtungsvorrichtung (13) nach einem der vorhergehenden Ansprüche, **dadurch gekennzeichnet, dass** die Scheibe (15 bis 18) die dem Innenraum (2) nächstgelegene Scheibe (16) eines Scheibenpakets (14) der Tür (4) mit zumindest zwei Scheiben (15 bis 18) ist.

10. Beleuchtungsvorrichtung (13) nach einem der vorhergehenden Ansprüche, **dadurch gekennzeichnet, dass** die Beleuchtungsvorrichtung (13) zumindest zwei Scheiben (15 bis 18) einer Tür (4) zum Verschließen des Innenraums (2) als Lichtleiter aufweist, wobei in beide Scheiben (15 bis 18) das Licht (22) zumindest einer Lichtquelle (19) über zumindest jeweils eine Einkoppelseite (16a bis 16d) der Scheiben (15 bis 18) in diese Scheiben (15 bis 18) einkoppelbar ist, und an jeweils einer dem Innenraum (2) abgewandten Oberfläche (16f) der Scheiben (15 bis 18) jeweils zumindest ein Lichtumlenkelement (20, 21) angeordnet ist, mit welchem das in die jeweilige Scheibe (15 bis 18) eingekoppelte Licht (22) auf die dem Innenraum (2) zugewandte Oberfläche (16e) umlenkbar und aus dieser zugewandten Oberfläche (16e) aus der jeweiligen Scheibe (15 bis 18) in den Innenraum (2) auskoppelbar ist.

11. Haushaltsgerät (1) mit einem Innenraum (2) und einer Tür (4) zum Verschließen des Innenraums (2) und mit einer Beleuchtungsvorrichtung (13) nach einem der vorhergehenden Ansprüche.

12. Haushaltsgerät nach Anspruch 11, **dadurch gekennzeichnet, dass** es ein Gargerät (1), insbesondere ein Backofen, ist und der Innenraum ein Garraum (2) ist.
